# EUROPÄISCHE PATENTSCHRIFT

(11) **EP 0 427 049 B1**
(45) Veröffentlichungstag und Bekanntmachung des Hinweises auf die Patenterteilung: **24.11.1993**
(21) Anmeldenummer: 90120458.6
(22) Anmeldetag: 25.10.1990
(51) Int. Cl.: C09K 11/02, H01J 9/22

(54) **Verfahren zum Aufbringen einer Leuchtstoffschicht**
Process of deposition of phosphor film
Procédé pour déposer une couche luminescente

(30) Priorität: 07.11.1989 DE 3937008
(43) Veröffentlichungstag der Anmeldung: 15.05.1991
(73) Patentinhaber: Licentia Patent-Verwaltungs-GmbH, 60596 Frankfurt (DE)
(72) Erfinder: Gerland, Klaus, W-7900 Ulm-Gögglingen (DE); Hoffmann, Klaus, W-6104 Seeheim-Jugenheim (DE); Widmann, Hermann Dr.rer.nat., W-7900 Ulm (DE)
(74) Vertreter: Amersbach, Werner, Dipl.-Ing.

(56) Entgegenhaltungen:
- WO-A-89/09250
- DE-A- 3 710 951
- FR-A- 1 567 401
- DATABASE WORLD PATENT INDEX AN 82-14811E; & JP A 57008266

## Beschreibung

Die vorliegende Erfindung betrifft ein Verfahren nach dem Oberbegriff des Patentanspruches 1.

Die Herstellung von Leuchtstoffschichten mit Glasloten als Haftvermittler, ist zur Erstellung von Leuchtschirmen für Elektronenröhren mit gläserner Frontplatte bekannt. Bei solchen Herstellungsverfahren wird z.B. ein körniger Leuchtstoff mit einem pulverigen Glaslot durch intensives Mahlen und Sieben vermischt, mittels einer Sprühvorrichtung auf den Leuchtschirmträger aufgespritzt und dann bei erhöhten Temperaturen aufgesintert. Bei diesem Aufbringverfahren läßt sich ein gewisses Entmischen des Glaslotes und des Leuchtstoffes nicht vermeiden wodurch Ungleichmäßigkeiten in der Leuchtstoffschicht und in der Flächenhaftfestigkeit auftreten.

Der vorliegenden Erfindung liegt die Aufgabe zugrunde, das eingangs genannte Verfahren so zu verbessern, daß Leuchtstoffschichten mit verbesserter Gleichmäßigkeit und Haftung bei einfach zu beherrschenden Verfahrensgängen herstellbar sind.

Diese Aufgabe wird durch die im Kennzeichen des Patentanspruches 1 angegebenen Merkmale gelöst.

Durch die Bindung des Glaslotes an die Leuchtstoffteilchen wird eine äußerst gleichmäßige Verteilung der beiden Komponenten gewährleistet. Gleichzeitig ergibt sich dadurch eine verbesserte und gleichmäßigere Haftung der Leuchtstoffteilchen an der Substratoberfläche des Leuchtstoffträgers.

Anhand des nachfolgend beschriebenen Ausführungsbeispiels wird die Erfindung näher erläutert.
Das körnige Leuchtstoffpulver wird mit einem Glaslotpulver in einem Alkohol, bevorzugt Isopropanol, und mit einem vorpolymerisierten Acrylharz gut vermischt. Dies geschieht bevorzugt durch Rollen auf einem Walzenstuhl. Diese vermischte Aufschlämmung wird dann filtriert und dann unter erhöhten Temperaturen getrocknet. Geeignete Temperaturen sind z.B. etwa 100° C bis 150° C. Bei dieser Trocknung findet eine weitere Polymerisierung des Acrylharzes statt, wodurch das Glaslotpulver abriebfest an der Oberfläche der Leuchtstoffteilchen verankert wird.

Bei der Beschichtung, d.h. beim Aufbringen des Leuchtstoffes, wird die Oberfläche des zu beschirmenden Substrates mit einem in einem organischen Lösungsmittel gelösten Acrylharz belegt. Nach dem Verdunsten des Lösungsmittels wird auf der verbleibenden Acrylharzschicht das mit Glaslot ummantelte Leuchtstoffpulver fein verteilt aufgebracht, was z.B. mittels eines weichen Pinsels geschehen kann. Anschließend wird diese fein verteilt aufgebrachte Glaslot-Leuchtstoffschicht bei erhöhter Temperatur von z.B. etwa 600° C kurzzeitig an Luft erhitzt. Die Erhitzung ist so vorzunehmen, daß das Glaslot schmilzt, so daß die Leuchtstoffteilchen abriebfest an der Leuchtstoffträgeroberfläche verankert werden.

Das Verfahren eignet sich besonders zum Aufbringen von Leuchtstoffschichten auf Metallsubstrate. Es ist gegebenenfalls aber auch verwendbar zur Herstellung von Leuchtschirmen für Kathodenstrahlröhren.

## Patentansprüche

1. Verfahren zum Aufbringen einer Leuchtstoffschicht auf einen Leuchtstoffträger unter Verwendung von Leuchtstoffpulver und Glaslotpulver, bei dem die Leuchtstoffteilchen zunächst mit dem Glaslot ummantelt werden und dann die ummantelten Leuchtstoffteilchen durch Schmelzen der Glaslotummantelung auf den Leuchtstoffträger aufgebracht werden, dadurch gekennzeichnet, daß zwecks Ummantelung die Leuchtstoffteilchen diese zunächst in einem Alkohol mit dem Glaslotpulver und einem vorpolymerisierten Acrylharz vermischt werden, dann filtriert werden, daß dann bei einer erhöhten Temperatur von 80°C bis 250°C die Verankerung des Glaslotpulvers auf den Leuchtstoffteilchen durch Polymerisation des Acrylharzes vorgenommen wird und daß dann die mit dem Glaslotpulver ummantelten Leuchtstoffteilchen auf den Leuchtstoffträger aufgebracht und durch Schmelzen der Glaslotpulverteilchen auf den Leuchtstoffträger aufgeschmolzen werden.

2. Verfahren nach Anspruch 1, dadurch gekennzeichnet, daß zwecks Beschichtung des Leuchtstoffträgers dieser zunächst mit einem, in einem organischen Lösungsmittel gelösten Acrylharz belegt wird, dann nach zumindest teilweisem Verdunsten des Lösungsmittels die ummantelten Leuchtstoffteilchen fein und gleichmäßig verteilt auf die Acrylharzschicht aufgebracht werden und dann bei erhöhter, das Glaslot erweichender Temperatur an Luft, die Leuchtstoffteilchen auf der Oberfläche des Leuchtstoffträgers verankert werden.

3. Verfahren nach einem der Ansprüche 1 bis 2, gekennzeichnet durch die Anwendung beim Aufbringen von Leuchtstoffschichten auf Metallsubstrate.

## Claims

1. Process for the deposition of a layer of fluorescent substance on a fluorescent substance carrier with use of fluorescent substance powder and glass solder powder, in which the fluorescent substance particles are initially encased by the glass solder and then the encased fluorescent substance particles are deposited on the fluorescent substance carrier by melting of the glass solder casing, characterised thereby that for the purpose of encasing the fluorescent substance particles these are initially mixed in an alcohol with the glass solder powder and a pre-polymerised acrylic resin and then are filtered, that then the bonding of the glass solder powder to the fluorescent substance particles is undertaken by polymerisation of the acrylic resin at an elevated temperature of 80°C to 250°C and that then the fluorescent substance particles encased by the glass solder powder are deposited on the fluorescent substance carrier and are fused onto the fluorescent substance carrier by melting of the particles of the glass solder powder.

2. Process according to claim 1, characaterised thereby that for the purpose of coating the fluorescent substance carrier this is initially covered with an acrylic resin dissolved in an organic solvent, then after at least partial evaporation of the solvent the encased fluorescent substance particles are deposited finely and uniformly distributed on the acrylic resin layer and then the fluorescent substance particles are bonded on the surface of the fluorescent substance carrier at an elevated temperature, which softens the glass solder, in air.

3. Process according to one of the claims 1 to 2, characterised by the use for the deposition of fluorescent substance layers on metal substrates.

## Revendications

1. Procédé pour déposer une couche luminescente sur un support de couches luminescentes à l'aide d'une poudre luminescente et d'une poudre de soudure de verre, dans lequel les particules luminescentes sont tout d'abord enrobées de soudure de verre puis les particules luminescentes enrobées sont appliquées sur le support de couches luminescentes par fusion de l'enrobage de soudure de verre, caractérisé en ce que, pour l'enrobage des particules luminescentes, celles-ci sont tout d'abord mélangées dans un alcool avec la poudre de soudure de verre et avec une résine acrylique prépolymérisée, puis sont filtrées, en ce que l'ancrage de la poudre de soudure de verre sur les particules luminescentes est ensuite réalisé à température élevée de 80°C à 250°C par polymérisation de la résine acrylique et en ce que les particules luminescentes enrobées de poudre de soudure de verre sont ensuite appliquées sur le support de couches luminescentes et sont fondues sur le support de couches luminescentes par fusion des particules de poudre de soudure de verre.

2. Procédé selon la revendication 1, caractérisé en ce que, pour le revêtement du support de couches luminescentes, celui-ci est tout d'abord recouvert d'une résine acrylique dissoute dans un solvant organique, puis, après évaporation au moins partielle du solvant, les particules luminescentes enrobées sont appliquées sur la couche de résine acrylique de manière à être réparties finement et uniformément après quoi les particules luminescentes sont ancrées à l'air sur la surface du support de couches luminescentes à une température élevée qui provoque un ramollissement de la soudure de verre.

3. Procédé selon l'une des revendications 1 et 2, caractérisé en ce qu'il est utilisé pour le dépôt de couches luminescentes sur des substrats métalliques.
